# EUROPEAN PATENT APPLICATION

(11) **EP 1 009 193 A1**
(43) Date of publication of application: **14.06.2000**
(21) Application number: 99309621.3
(22) Date of filing: 30.11.1999
(51) Int. Cl.: H04Q 11/04, H04J 3/06

(54) **An arrangement for synchronization of multiple streams of synchronous traffic delivered by an asynchronous medium**

(30) Priority: 11.12.1998 US 209712
(71) Applicant: LUCENT TECHNOLOGIES INC., Murray Hill, New Jersey 07974-0636 (US)
(72) Inventor: Petty, Norman W., Boulder, Colorado 80302 (US)
(74) Representative: Watts, Christopher Malcolm Kelway, Dr.

(57) **Abstract**

An ATM cell constructor (100) of an ATM transmitter assembles a stream of frames of constant bit-rate traffic received on a listen TDM bus (102) into cell payloads (1104) using ATM adaptation layer 1 (AAL1). Once every eight cells, the AAL1 structured data transfer (SDT) cell constructor layer (112) introduces a one-octet SDT offset pointer (1120) into the payload. This pointer designates traffic-block (TDM frame) boundaries. The payload with an attached ATM header forms an ATM cell, and the constructor transmits a stream of the ATM cells, carrying traffic of one wideband channel, to a receiver. A receiver receives one or more streams of the ATM cells from one or more transmitters. During each frame interval, an ATM cell deconstructor (2100) of the ATM receiver disassembles a block's worth of traffic from a received ATM cell of each received stream, assembles the disassembled traffic from every stream into a TDM frame, and transmits the frame on a talk TDM bus (102). In response to commencing to disassemble a whole block's worth of traffic from an ATM cell that includes the SDT offset pointer, the deconstructor adjusts the disassembling to commence the disassembling of the whole block's worth of traffic at the block boundary pointed to by the SDT offset pointer, thereby aligning frames on the talk TDM bus with the frames on the listen TDM bus. The listen and talk TDM buses are thereby synchronized with each other.

## Description

### Technical Field

This invention relates generally to packet-switching systems, such as asynchronous transfer mode (ATM) systems, and specifically to transmission-delay variations in such systems.

### Background of the Invention

Today's business communications environment consists of two separate network infrastructures: a voice network (such as a private branch exchange (PBX)) characterized by real-time, high-reliability, constant bit-rate (CBR) connections; and a data network (such as a packet network) characterized by high-bandwidth variable bit-rate (VBR) connections. Business needs for simplified maintenance, management, and access to information on diverse networks are forcing the convergence of these networks along with a new class of real-time multimedia networks. Asynchronous transfer mode (ATM) provides a single infrastructure that cost-effectively and flexibly handles both switching and transmission for the traffic types mentioned above (voice, video, and data) for both local-area networks and wide-area networks. The evolving network convergence requires the adaptation of the legacy PBX voice traffic to ATM. Voice telephony over ATM (VTOA) specifications allow adaptation of compressed or uncompressed voice pulse-code modulated (PCM) data streams into streams (virtual circuits) of CBR cells.

An ATM cell, regardless of the traffic it carries, is a packet 53 octets long: 48 octets of payload attached to a 5-octet header. The header contains addressing and management information used to direct the cell from source to destination and to ensure that the negotiated aspects of the traffic-flow through the ATM network are met. CBR traffic is assembled into cell payloads using ATM Adaptation Layer 1 (AAL1). The AAL1 cell constructor layer uses the first octet of the payload for its header and the remaining 47 octets to carry CBR information. Once every eight cells, the AAL1 structured data transfer (SDT) cell constructor layer introduces a one-octet pointer into the CBR payload. This pointer designates traffic-block boundaries. It is used at the receiving end to generate framing signals for devices that convert the ATM traffic into T1 or E1 (telephony trunk) traffic. ATM cell construction is then completed by attaching the ATM header to the payload.

An individual ATM cell carries traffic of a single narrowband or wideband channel (a single stream). Illustratively, a narrowband channel is represented by a single time slot of each successive frame of a time-division multiplex (TDM) bus, while a wideband channel is represented by a plurality of time slots of each successive frame of a TDM bus. If a transmitter handles a plurality of channels, different ones of the ATM cells that it transmits carry traffic of different channels (streams). Likewise, if a receiver handles a plurality of channels, different ones of the ATM cells that it receives carry traffic of different channels (streams). A transmitter may transmit the traffic of different channels to different receivers. Likewise, a receiver may receive the traffic of different channels from different transmitters.

If any of the channels are synchronous channels, the asynchronous nature of the ATM transmission network adversely affects their synchronicity. For example, if a wideband channel is a multiplexed channel made up of a plurality of sub-channels (each represented by a single time slot of each successive frame of a TDM bus), loss of synchronization results in the traffic of the sub-channels being transmitted at the receiver into the wrong time slots of the wideband channel on the receiver's TDM bus. Specifically, known existing devices that convert received ATM traffic into T1 or E1 (multi-sub-channel) traffic do not synchronize (align) the received blocks of traffic with the appropriate bits on a T1, E1, or TDM bus that is synchronized to another source (e.g., the destination synchronization source). In my prior patent application entitled "An Arrangement for Synchronization of a Stream of Synchronous Traffic Delivered by an Asynchronous Medium", EP-Application No. 99 307 095.2. I disclose an arrangement for synchronization of a single stream of synchronous traffic delivered by an asynchronous medium. This arrangement, however, is not well suited to individually synchronizing multiple synchronous streams that are incoming to a common receiver over an asynchronous medium.

### Summary of the Invention

This invention is directed to solving these and other problems and disadvantages of the prior art. According to the invention, the received . blocks of traffic of one or more streams of synchronous traffic are all synchronized with the destination synchronization source. The synchronization is advantageously effected using the SDT block-boundary pointer. Generally according to the invention, synchronous information received by a receiver over an asynchronous communications link is synchronized with a synchronous communications medium at the receiver as follows. The receiver asynchronously receives a stream of information, including the synchronous information, and an indication (e.g., the SDT block-boundary pointer) of where in the stream of information occurred a boundary between blocks (e.g., between information carried by different time-division multiplex (TDM) frames) of the stream of information. Illustratively, each stream of information comprises a wideband channel formed by a plurality of time slots of a TDM frame. The receiver assembles the received synchronous information along with other information (e.g., information from other streams of information, synchronous or asynchronous, received by the receiver) into transmission blocks (e.g., TDM frames), and transmits the transmission blocks on the medium (e.g., during TDM frame intervals of a TDM bus). In response to receiving the indication, the receiver adjusts the assembling operation so that the boundary between the blocks of the synchronous information, defined by the indication, forms a boundary between the synchronous information carried by two successive transmission blocks. In this manner, the receiver aligns received traffic from TDM frames at one or more transmitters with TDM frames on the medium. Illustratively, the assembling involves disassembling from the stream a block's worth of the synchronous information (the amount of information that is carried by a block) during each frame interval, and assembling the disassembled block's worth of information into a TDM frame during each frame interval. The adjusting effected in response to receiving the indication then involves adjusting the disassembling so that the disassembling during each frame interval begins and ends at a block boundary.

Advantageously according to the invention, synchronous information of multiple streams of information received by a receiver over an asynchronous communications link is synchronized with a synchronous communications medium at the receiver as follows. The receiver asynchronously receives a plurality of streams of information each including its own synchronous information and an indication of where in the stream occurred a boundary between blocks of the synchronous information carried by that stream. The receiver assembles the received synchronous information from the plurality of streams into transmission blocks, typically assembling the received synchronous information from the plurality of streams into each transmission block, and transmits the transmission blocks on the medium. In response to receiving the indication in any one of the streams, the receiver adjusts the assembling for that stream so that the boundary between the blocks of the synchronous information of that stream forms a boundary between the synchronous information of that stream carried by two successive transmission blocks. If what is being received is a plurality of streams each comprising asynchronous transfer mode (ATM) cells carrying the synchronous information of that stream as AAL payload and the indication as a structured data transfer (SDT) offset pointer that points to a first block boundary between blocks in the AAL payload, then assembling illustratively involves disassembling from an ATM cell of each stream a block's worth of the synchronous information during each frame interval and assembling the disassembled block's worth of the synchronous information from every stream into a TDM frame during each frame interval. Adjusting then involves, in response to commencing to disassemble a whole block's worth of information from an AAL payload that includes the SDT offset pointer, adjusting the disassembling to commence the disassembling of the whole block at the block boundary pointed to by the SDT offset pointer.

The invention includes both a method as well as a corresponding apparatus, and a computer readable medium that contains software which, when executed in a computer, causes the computer to perform the method.

These and other features and advantages of the present invention will become more apparent from the following description of an illustrative embodiment of the invention considered together with the drawing.

### Brief Description of the Drawing

FIG. 1 is a block diagram of an ATM cell constructor that includes an illustrative embodiment of the invention;
FIG. 2 is a functional flow diagram of operations of a system sequencer of the ATM cell constructor of FIG. 1;
FIG. 3 is a functional flow diagram of operations of an AAL1-request-sync function of an AAL1-request component of the ATM cell constructor of FIG. 1;
FIG. 4 is a functional flow diagram of operations of a time slot interchange (TSI) of the ATM cell constructor of FIG. 1;
FIG. 5 is a functional flow diagram of operations of a digital signal processor (DSP) of the ATM cell constructor of FIG. 1;
FIGS. 6-8 are a functional flow diagram of operations of the AA1-request component of the ATM cell constructor of FIG. 1;
FIG. 9 is a block diagram of an ATM cell;
FIG. 10 is a block diagram of an ATM cell deconstructor that includes an illustrative embodiment of the invention;
FIG 11. is a functional flow diagram of operations of an AAL1-indication-sync function of an AA1-indication component of the ATM cell deconstructor of FIG. 10;
FIGS. 12-14 are a functional flow diagram of operations of the AAL1-indication component of the ATM cell deconstructor of FIG. 10; and
FIG. 15 is a flow-diagram summary of the functionality of the ATM cell constructor and deconstructor of FIGS. 1 and 10 that is relevant to the invention.

### Detailed Description

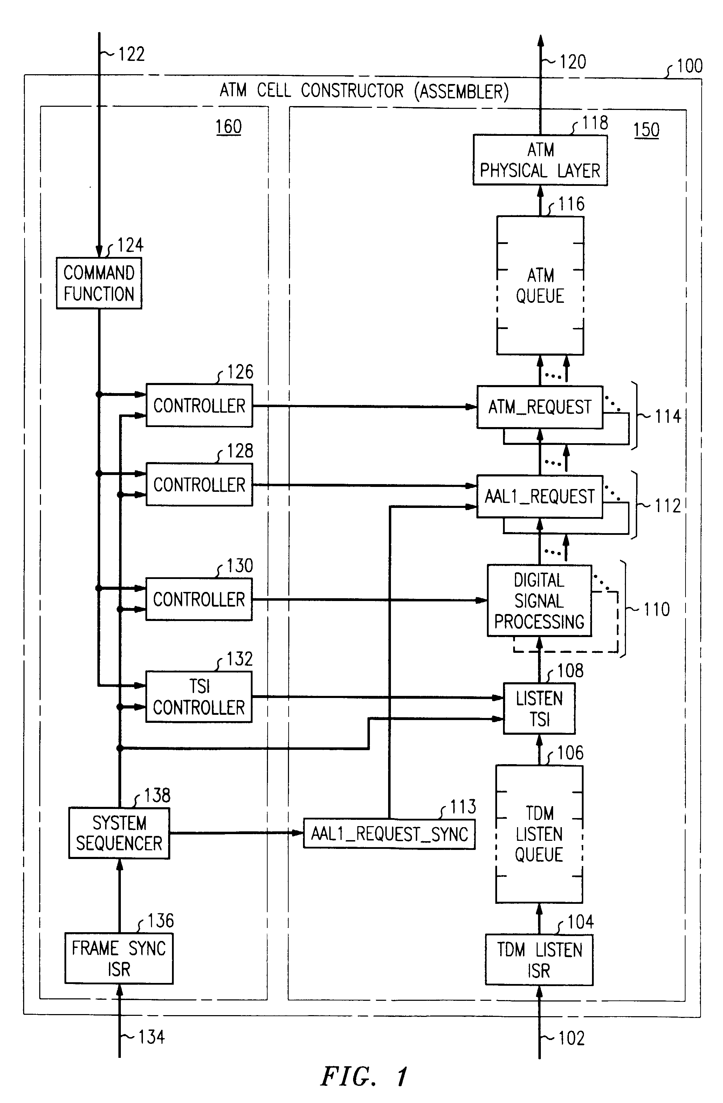

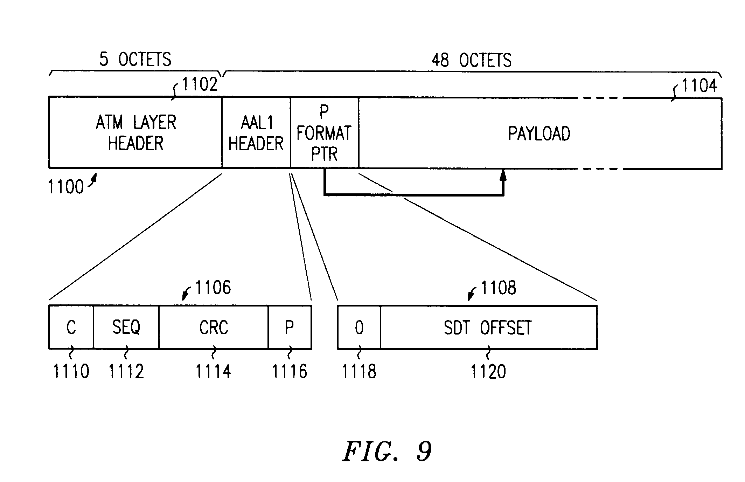

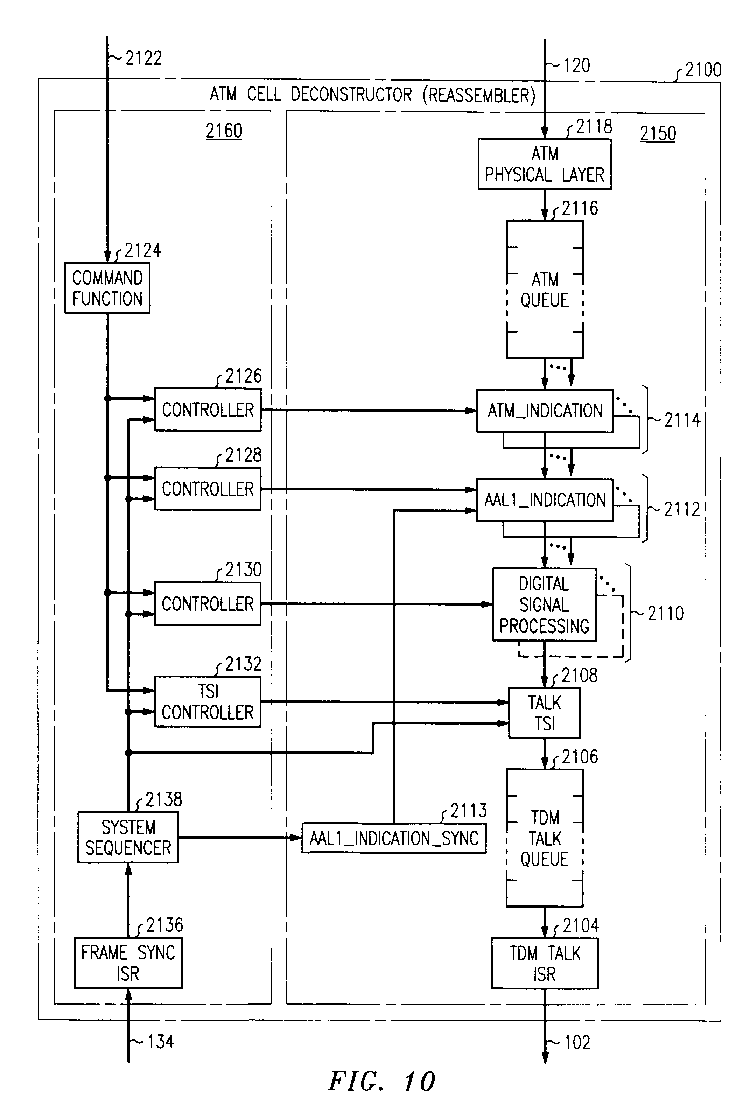

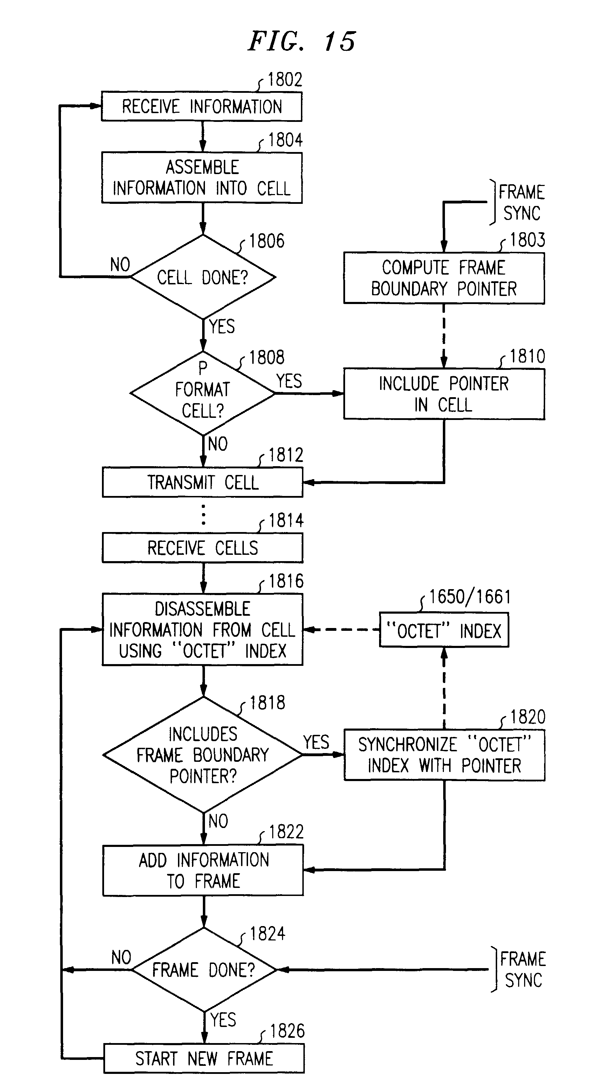

The high-level operations of ATM cell transmitter (constructor 100 of FIG. 1) and receiver (deconstructor 2100 of FIG. 10) that are relevant hereto are summarized in FIG. 15. On a per-(wideband) channel basis, constructor 100 receives a piece of information (a time slot of channel traffic) from listen bus 102 (FIG. 1), at step 1802, and assembles it into an ATM cell 1100 of the corresponding channel, at step 1804. Each time that it receives a frame sync signal, it recomputes a frame boundary pointer (SDT offset 1120 of FIG. 9) for each channel to point to the spot in the channel's ATM cell where the frame sync signal occurred, at step 1803. After step 1804, on a per-channel basis, constructor 100 checks if it is done assembling an ATM cell 1100; if not, it returns to step 1802, and if so, it checks whether it is a P-format cell, at step 1808. If it is a P-format cell, constructor 100 includes the present value of frame boundary pointer (SDT offset 1120) of the corresponding channel in the cell 1100 (FIG. 9), at step 1810. The frame boundary pointer points to the first frame boundary in the ATM cell's payload. Thereafter, or if the ATM cell 1100 is not a P-format cell, constructor 100 transmits the ATM cell 1100 on ATM link 120, at step 1812.

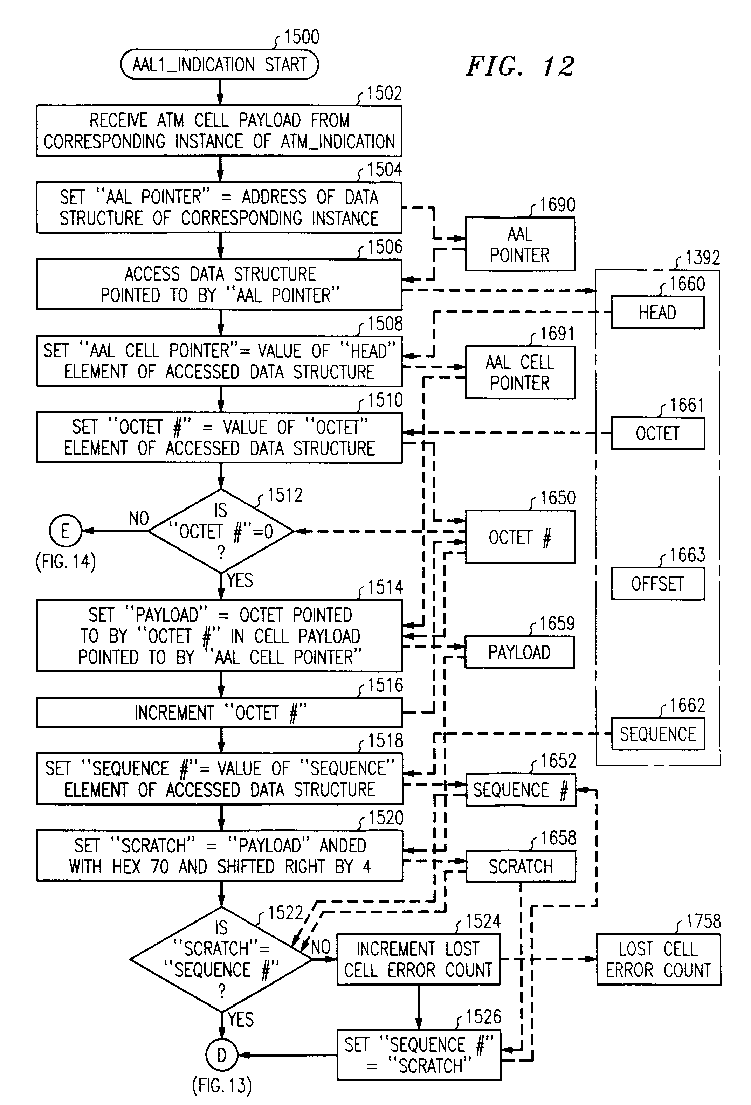

ATM cells 1100 from one or more transmitters 100 are received by deconstructor 2100, at step 1814. On a per-(wideband) channel basis, deconstructor 2100 disassembles information (a timeslot of channel traffic) from the corresponding channel's ATM cells 1100 piece-by-piece (octet by octet) using an index ("octet 1661" of FIG. 12) corresponding to that channel and pointing to the item of information that is presently being disassembled from that channel's ATM cell, at step 1816. On a per-channel basis, deconstructor 2100 checks whether the disassembled information includes the frame boundary pointer (SDT offset 1120), at step 1818. If so, deconstructor 2100 synchronizes the index of the corresponding channel to the pointer so that at the start of a new frame the index will point to the same place in the ATM cell payload as the pointer (i.e., a frame boundary), and thereby synchronizes the receiver of the traffic (deconstructor 2100) with the transmitter of the traffic (a constructor 100). Following step 1818 or 1820, deconstructor 2100 adds the pieces of information that it has extracted from the different channels' ATM cells 1100 to a frame that it is forming on talk bus 102 (FIG. 10), at step 1822, and checks whether it has completed the frame, at step 1824. If not, operation returns to step 1816; if so, deconstructor 2100 starts a new frame, at step 1826, and operation returns to step 1816.

FIG. 1 shows an ATM cell constructor 100, also known as an ATM cell assembler, such as may be used in an interface port circuit of a PBX or in any other ATM interface apparatus to construct ATM cells from a stream of CBR traffic, such as voice and/or video traffic. Cell constructor 100 and each of its components may be individually implemented jointly and separately either in hardware or in software/firmware. In the latter case, the software or firmware may be incorporated in a single integrated chip with the hardware, or may be stored in any desired memory device readable by a computer -- for example, a read-only memory (ROM) device readable by an interface port circuit processor. Multiple streams (also referred to herein as channels, calls, or communications) of CBR traffic are received by ATM cell constructor 100 over a communications medium 102, and follow a data path 150 through ATM cell constructor 100 where successive segments of the traffic streams are formed into packets (ATM cells). If the switching system employing ATM cell constructor 100 is the Definity® PBX of Lucent Technologies Inc., medium 102 is a time-division multiplexed (TDM) bus that carries up to 242 individual streams of traffic in 242 individual time slots of repeating frames. Each frame carries one (narrowband) or more (wideband) time slots of each channel's traffic stream. Each time slot carries one byte (octet) of traffic.

A TDM listen interrupt service routine (ISR) 104 captures traffic from designated time slots of medium 102 and feeds them serially into a TDM listen queue 106. A listen time-slot interchanger (TSI) 108 retrieves time slots of traffic from TDM listen queue 106 and performs any necessary time-slot interchange function thereon. Listen TSI 108 provides support for wideband channels that comprise multiple time slots; it ensures that those time slots are processed in their proper order. Listen TSI 108 then feeds the reordered time slots of traffic into one or more digital signal processors (DSPs) 110. A single DSP 110 may be time-shared by the plurality of channels, or a separate DSP 110 may be dedicated to serving each channel. DSPs 110 perform designated processing for the traffic of each channel, e.g., conferencing, echo cancellation, gain adjustment, compression, etc. The processed traffic of each channel is output by DSPs 110 into a separate instance of AAL1-request processor 112, each dedicated to serving a different channel. Each instance of AAL1 -request processor 112 constructs ATM cell payloads from the corresponding channel's received traffic. Whenever it completes construction of a single cell's payload, an instance of AAL1-request processor 112 sends that payload to a corresponding instance of ATM-request processor 114. There is one instance of ATM-request processor 114 per channel. An instance of ATM-request processor 114 attaches an ATM cell header to the payload to complete the construction of an ATM cell and feeds the ATM cell into an ATM queue 116. ATM queue 116 is fed by all instances of ATM-request processor 114. An ATM physical layer processor 118 sequentially retrieves cells from ATM queue 116 and transmits them on an ATM communications medium 120 toward their destinations.

It takes on the order of a TDM bus frame-interval to process an individual time slot of traffic through data path 150; of course, up to a frame's worth of time slots may be processed in parallel. A TDM bus frame-interval is therefore taken as a cell construction period. It is a predetermined time interval during which each instance of ATM-request processor 114 can mature an ATM cell for transmission. It can take up to 47 frames to construct a cell, however.

A control structure 160 controls the operation of the components of data path 150. Cell constructor 100 receives control information over a control medium 122. If the switching system employing cell constructor 100 is the above mentioned Definity PBX, control medium 122 is illustratively either a control channel defined by the first 5 time slots of frames of the TDM bus of the PBX or a packet bus of the PBX. The control information is received in cell constructor 100 by a command function 124. This is a management function which tells controllers 126-132 of individual components of data path 150 what their component should be doing and when. For example, it tells TSI controller 132 when listen TSI 108 should begin to support a new time slot and which instance of AAL1-request 112 that time slot should be associated with, it tells controller 126 what VCI/VPI an instance of ATM-request 114 should use for a particular channel, it tells controller 128 when to initialize an instance of AAL1-request 112 for a new channel, and it tells DSP 110 what processing to perform for which channel. Controllers 126-132 then exert the corresponding necessary control over their associated components in data path 150.

To keep cell constructor 100 properly synchronized with the operation of communications medium 102 in the instance where medium 102 is a TDM bus, a start-of-frame signal is supplied to cell constructor 100 via a signal line 134. Line 134 is monitored by a frame sync interrupt service routine (ISR) 136, which issues an interrupt each time that it detects the start-of-frame signal. The interrupt is received by a system sequencer 138, which is a state machine that causes the components of data path 150 to step through their functions during each frame period.

The structure of an ATM cell 1100 assembled by ATM cell constructor 100 is shown in FIG. 9. It comprises a conventional 5-octet ATM layer header 1102 and a conventional 48-octet payload 1104. The first octet of payload 1104 in every ATM cell 1100 is an AAL1 layer header 1106, and the second octet of payload 1104 in every eighth ATM cell 1100 is a P-format pointer 1108, also as is conventional. AAL1 header 1106 conventionally comprises a one-bit convergence sublayer indication C 1110, a three-bit call sequence number SEQ 1112, a three-bit cyclic redundancy code over the sequence number CRC 1114, and a one-bit parity indication P 1116. C 1110 is used to provide clock synchronization between the transmitting and receiving equipment. It is set to a "one" on even sequence-count values to indicate P-format payload. SEQ 112 is used by the receiving equipment to detect lost or misinserted cells. P 1116 maintains even parity over AAL1 header 1106. P-format pointer 1108 comprises a seven-bit SDT (structured data transfer) offset 1120 and a one-bit even-parity indication O 1108. SDT offset 1120 is a pointer into payload 1104 that identifies a boundary between blocks (the start of a block) of data in payload 1104. O 1118 maintains even parity over SDT offset 1120.

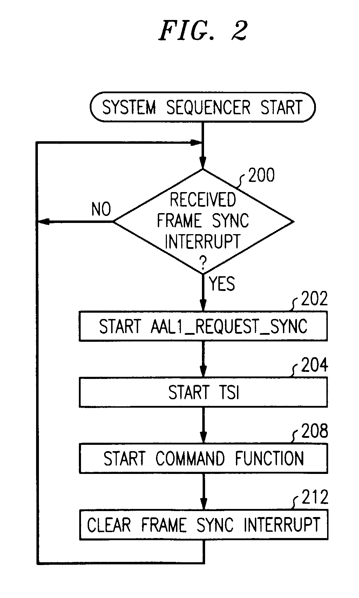

High-level functionality of system sequencer 138 (FIG. 1) is shown in FIG. 2. System sequencer 138 awaits receipt of a frame sync interrupt from frame sync ISR 136 (FIG. 1), at step 200. Upon receipt of the interrupt, system sequencer 138 starts (e.g., invokes execution of) AAL1-request-sync 113 (a global function of AAL1-request 112 of FIG. 1), at step 202, and of TSI 108 (FIG. 1), at step 204. System sequencer 138 then starts command function 124 (FIG. 1), at step 208. Following step 208 or 210, system sequencer 138 clears the frame sync interrupt, at step 212, and returns to step 200 to await receipt of the next frame sync interrupt.

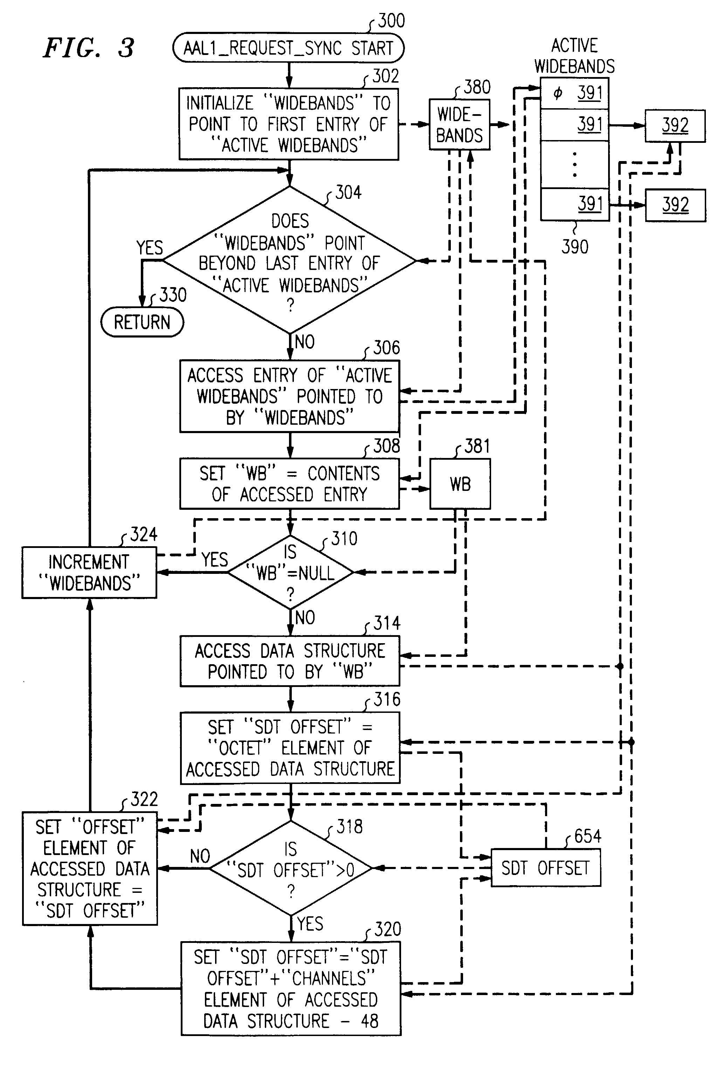

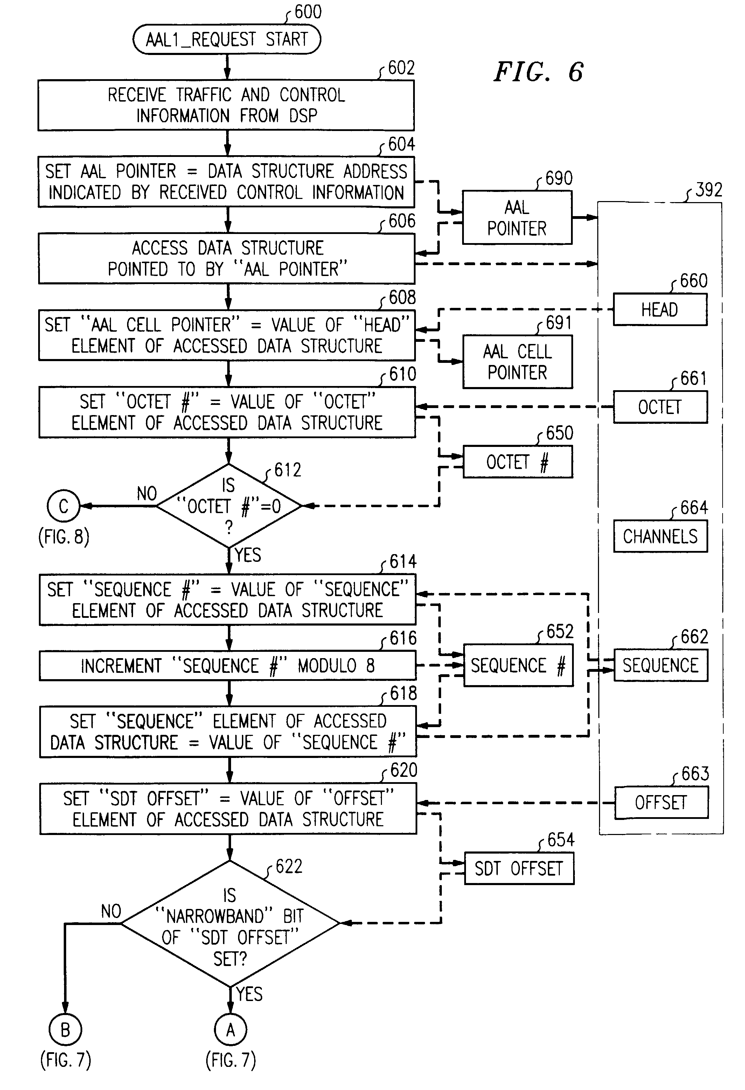

The functionality of AAL1 -request-sync function 113 (FIG. 1) is shown in FIG. 3. Sync function 113 has an associated "active widebands" array 390. Array 390 includes a plurality of entries 391 each corresponding to a different instance of AAL1-request 112. If the corresponding instance of AAL1-request 112 (FIG. 1) is presently handling a wideband (multiple DS0) - channel, the entry 391 contains a pointer to a data structure 392 of that instance 112 (see FIG. 6, described below); otherwise, the entry is null. Upon its invocation, at step 300, sync function 113 initializes a local variable "widebands" 380 to point to the first entry 391 of "active widebands" array 390, at step 302. "Widebands" 380 is a pointer to the one instance of AAL1-request 112 that is presently under consideration. Sync function 113 then checks if "widebands" 380 points beyond the last entry 391 of array 390, at step 304. If so, it means that sync function 113 has completed processing for all instances of AAL1-request 112, and so it returns to the point of its invocation, at step 330. But initially "widebands" 380 will not point beyond the last entry 391 of array 390, and so sync function 113 accesses the entry 391 of "active widebands" array 390 that is pointed to by "wideband" 380, at step 306, and sets the value of a local variable "WB" 381 to the value of the pointer in the accessed entry 391, at step 308. "WB" 380 is thus a pointer to the data structure 392 of the AAL1-request 112 (FIG. 1) instance that is presently under consideration. Sync function 113 then checks if the value of "WB" 381 is null, at step 310. If so, it means that the AAL1-request 112 instance under consideration is not handling a wideband channel, and so sync function 113 increments the value of "widebands" 380 to point to the next entry 391 of "active widebands" array 390, at step 324, and returns to step 304. If the value of "WB" 381 is not null, sync function 113 accesses data structure 392 that is pointed to by the value of "WB" 381, at step 314, and sets the value of an "SDT offset" local variable 654 to the value of an "octet" element 661 (FIG. 6) of the accessed data structure 392, at step 316. The "octet" element 661 is a pointer to the next octet to be added to the cell payload 1104 (FIG. 9) that is being assembled by the subject instance of AAL1 -request 112. Sync function 113 then checks if the value of "SDT offset" 654 is greater than a starting, or null, value (zero), at step 318. If so, it means that assembly of a cell payload 1104 has already begun, and so sync function 113 sets the value of "SDT offset" 654 to the present value of "SDT offset" 654 plus the value of a "channels" element 664 (FIG. 6) of the data structure 392 accessed at step 316, minus 48, at step 320. The value of "channels" element 664 is the number of DS0 channels that make up this wideband channel, and so equals the number of octets per frame of TDM bus 102 (FIG. 1) that will be put into the cell payload 1104 (FIG. 9) that is being assembled by the subject instance of AAL1-request 112, and 48 is the total number of octets of traffic carried by an ATM cell 1100 (FIG. 9). "SDT offset" 654 is thus made to point one ATM cell payload behind where the corresponding instance of AAL-1 request 112 will end cell-payload assembly at the end of the present frame interval. If AAL-1 request 112 will complete assembly of the present cell payload and start on another, "SDT offset" 654 will thus conveniently come to point to the first frame boundary in the present cell payload. Following step 320, or if it is determined at step 318 that the value of "SDT offset" 654 is not greater than zero, sync function 113 sets the value of an "offset" element 663 (FIG. 6) of the data structure 392 that was accessed at step 316 to the present value of "STD offset" 654, at step 322, and then proceeds to step 324. "Offset" element 663 thus points to the first octet of a TDM bus 102 frame that appears in ATM cell 1100, and hence marks a frame boundary in ATM cell 1100.

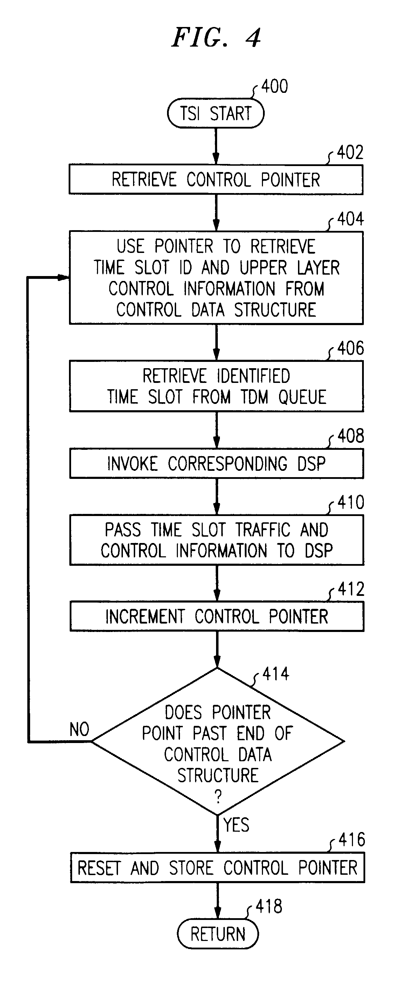

The high-level functionality of TSI 108 (FIG. 1) is shown in FIG. 4. Upon its invocation, at step 400, TSI 108 retrieves a pointer to its own control data structure, at step 402, and then uses the pointer to retrieve a time-slot identifier plus upper-layer control information for that time slot from the control data structure, at step 404. The upper-layer control information includes information on what processing DSP 110 (FIG. 1) must perform on this time slot, and an identifier of the instance of AAL1-request 112 (FIG. 1) that this time slot is associated with. TSI 108 then uses the time slot ID to retrieve the corresponding time slot of traffic from TDM queue 106 (FIG. 1), at step 406, if necessary invokes the time slot's corresponding instance of DSP 110, at step 408, and passes the traffic and the upper-layer control information to DSP 110, at step 410. TSI 108 then increments the pointer to its own control data structure, at step 412, and checks whether the pointer points past the last control data structure entry, at step 414. If not, it means that TSI 108 has not yet processed an entire TDM frame of time slots, and so TSI 108 returns to step 404. If the pointer does point past the end of the control data structure, it means that TSI 108 has finished processing a whole TDM frame, and so TSI 108 merely resets and stores the pointer, at step 416, and returns to the point of its invocation, at step 418.

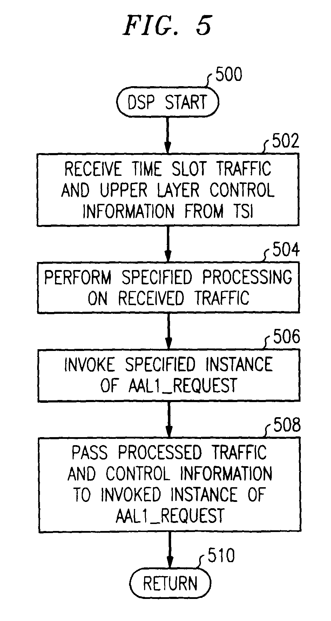

The high-level functionality of each instance of DSP 110 (FIG. 1) is shown in FIG. 5. Upon its invocation, at step 500, the instance of DSP 110 receives a time slot of traffic and upper layer control information from TSI 108 (FIG. 1), at step 502. DSP 110 then performs the processing specified by the received control information on the received traffic, at step 504. DSP then invokes the instance of AAL1-request 112 (FIG. 1) that is specified by the received control information, at step 506, and passes it the control information and the processed traffic, at step 508. DSP 110 then returns to the point of its invocation, at step 510.

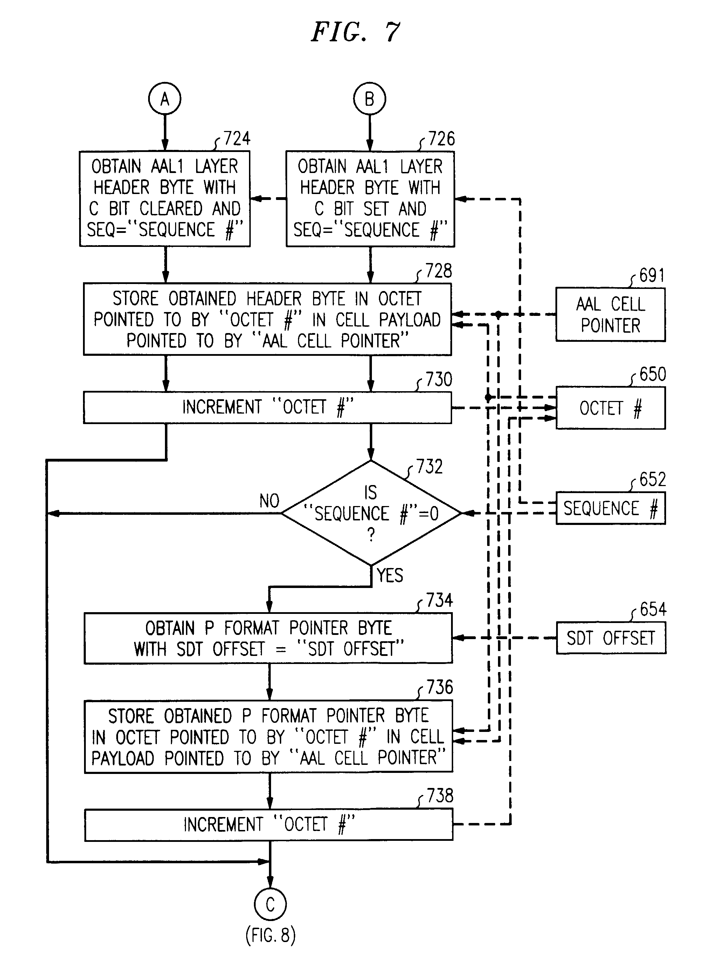

The high-level functionality of each instance of AAL1-request 112 (FIG. 1) is shown in FIG. 6. Upon its invocation, at step 600, the invoked instance of AAL1 -request 112 receives an octet of processed traffic and accompanying control information from DSP 110 (FIG. 1), at step 602. The control information includes an index that identifies an address of a data structure 392, and thereby specifies a particular instance of AAL1-request 112. AAL1-request 112 sets a local variable "AAL pointer" 690 to data structure 392 address identified by the received index, at step 604, and then accesses data structure 392 pointed to by "AAL pointer" 690, at step 606. AAL1-request 112 then sets a local variable "AAL cell pointer" 691 equal to the value of a "head" element 660 of the accessed data structure 392, at step 608, and sets a local variable "octet #" 650 to the value of an "octet" element 661 of the accessed data structure 392, at step 610. "Head" element 660 points to the cell payload 1104 (FIG. 9) being assembled by this instance of AAL1-request 112, while "octet" element 661 points to where the next octet is to be added to the cell payload that is presently being assembled by this instance of AAL1-request 112. AAL1-request 112 then assembles the received traffic into the ATM cell payload, at steps 612-636. If the invoked instance of AAL1-request 112 presently has a partly-formed cell payload 1104, it adds the received traffic to that payload 1104. If the invoked instance of AAL1-request 112 presently does not have a partly-formed cell payload 1104, it starts assembling a new cell payload 1104 by obtaining an AAL1 layer header byte 1106 (as well as a P-format pointer 1108 every eighth cell) (FIG. 9) and attaching the received traffic thereto. AAL1 -request 112 checks whether "octet #" 650 is equal to zero, at step 612. If so, there is no partly-formed cell payload 1104 and an AAL1 layer header byte 1106 must be formed. AAL1-request 112 therefore sets a local variable "sequence #" 652 to the value of a "sequence" element 662 of the accessed data structure 392, at step 614, and then increments "sequence #" 652 and ANDs it with 7 to perform a modulo-8 operation thereon, at step 616. AAL1-request 112 then stores the value of "sequence #" 652 in the "sequence" element 662 of the data structure 392 that was accessed at step 606, at step 618. AAL1 -request 112 next sets a variable "SDT offset" 654 to the value of an "offset" element 663 of the accessed data structure 392, at step 620. "Offset" element 663 represents a TDM bus 102 (FIG. 1) frame boundary in the cell payload 1104 (FIG. 9) that is being assembled. "Offset" element 663 includes a "narrowband" bit which, if it is set, indicates that the channel that corresponds to this offset value is a narrowband channel. AAL1-request 112 checks this bit in "SDT offset" 654 to determine if it is set, at step 622. If the "narrowband" bit is set, AAL1-request 112 obtains an AAL1 header 1106 byte (FIG. 9) with C bit 1110 cleared and SEQ 1112 equal to the value of "sequence #" 652, at step 724 (FIG. 7). If the "narrowband" bit is found to be cleared at step 622, AAL1-request 112 obtains an AAL1 header byte 1106 with C bit 1110 set and SEQ 1112 equal to the value of "sequence #" 652, at step 726 (FIG. 7). Header byte 1106 may either be computed on-the-fly or retrieved from a precomputed list of header bytes corresponding to the different sequence numbers. In either case, AAL1 -request 112 then stores the obtained header byte 1106 in the octet pointed to by "octet #" 650 in the cell payload 1104 (FIG. 9) pointed to by "AAL cell pointer" 690 (the cell payload being assembled by this instance of AAL1-request 112), at step 728. AAL1-request 112 then increments the value of "octet #" 650, at step 730, to point to the next octet being assembled in the payload 1104.

AAL1-request 112 next checks the value of "sequence #" 652 to see if it is zero, at step 732. If so, AAL1-request 112 obtains a P-format pointer 1108 byte (FIG. 9) with SDT offset 1120 equal to the value of "SDT offset" 654, at step 734. P-format pointer 1108 may either be computed on-the-fly or retrieved from a precomputed list of pointers corresponding to the different sequence numbers. AAL1-request 112 then stores the obtained P-format pointer 1108 byte in the octet pointed to by "octet #" 650 in the cell payload 1104 (FIG. 9) pointed to by "AAL cell pointer" 690, at step 736. AAL1-request 112 then increments the value of "octet #" 650, at step 738.

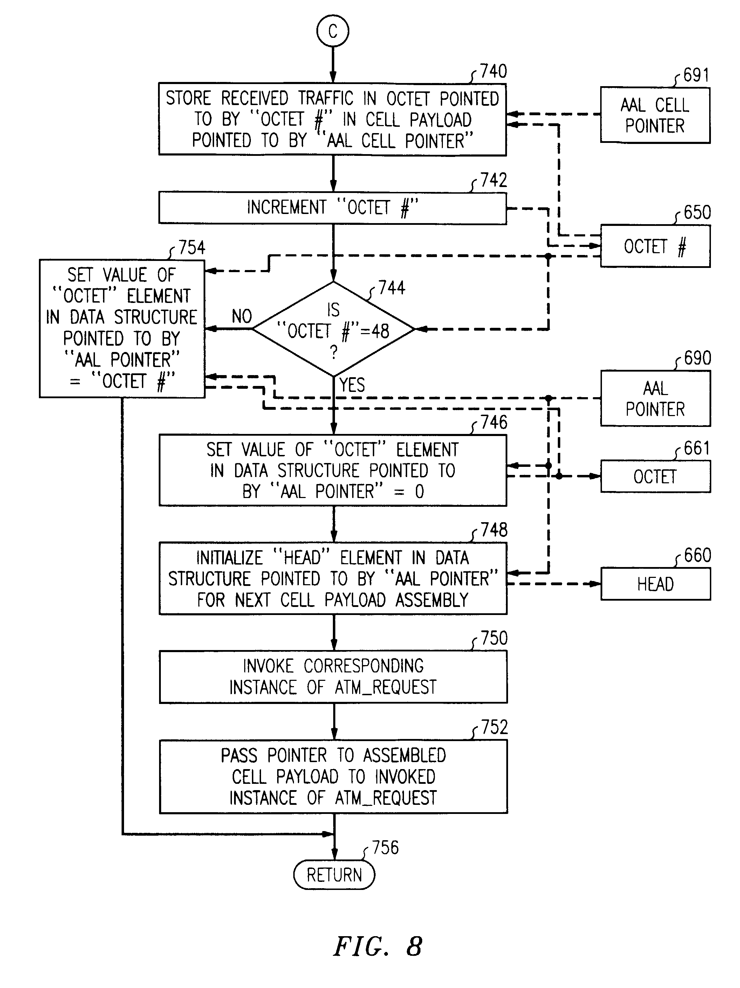

If "octet #" 650 is found to not be zero at step 612 (FIG. 6), if "sequence #" 652 is found to not be zero at step 732 (FIG. 7), or following step 738, AAL1 -request 112 proceeds to assemble a byte of traffic into cell payload 1104 (FIG. 9). It stores the traffic that it received at step 602 (FIG. 6) in the octet pointed to by "octet #" 650 in cell payload 1104 pointed to by "AAL cell pointer" 691, at step 740 (FIG. 8), and then increments the value of "octet #" 650, at step 742. AAL1-request 112 then checks if the value of "octet #" 650 is 48, at step 744. If not, assembly of cell payload 1104 is not yet completed, and so AAL1-request 112 sets the value of "octet" element 661 of the data structure 392 pointed to by "AAL pointer" 690 to the value of "octet #" 650, at step 754, and then returns to the point of its invocation, at step 756. If the value of "octet #" 650 is not 48, assembly of cell payload 1104 is completed, and so AAL1-request 112 sets the value of "octet #" 650 to zero, at step 746, and initializes the "head" element 660 of the AAL data structure 392 pointed to by "AAL pointer" 690 for next cell-payload 1104 assembly, at step 748, illustratively by setting "head" element 660 to point to the next free cell-payload assembly buffer. AAL1-request 112 then invokes a corresponding instance of ATM-request 114 (FIG. 1), at step 750, and passes to it a pointer to the completed ATM cell-payload 1104, at step 752. AAL1-request 112 then returns, at step 756.

FIG. 10 shows an ATM cell deconstructor 2100, also known as an ATM cell reassembler, such as may be and in an interface port circuit of a PBX or in any other ATM interface apparatus to deconstruct ATM cells 1100 (FIG. 9) into CBR traffic streams. Like constructor 100, (FIG. 1) deconstructor 2100 may be implemented either in hardware or in software/firmware. Deconstructor 2100 and its parts are functionally mirror images of constructor 100 and its parts. ATM cells 1100 are sequentially received on ATM communications medium 120 by an ATM physical layer 2118 and follow a data path 2150 through ATM cell deconstructor 2100 where the cells 1100 are broken down into successive segments of CBR traffic streams, and the traffic streams are transmitted on communications medium 102. ATM physical layer 2118 feeds received ATM cells 1100 into an ATM queue 2116, which supplies them to ATM-indication processor 2114. There is one instance of ATM-indication processor 2114 per channel. An instance of ATM-indication processor 2114 detaches the ATM layer header 1102 (FIG. 9) from ATM cells 1100 carrying its channel's traffic, and sends the ATM cell payload 1104 to a corresponding instance of AAL1-indication processor 2112, each one of which instances is dedicated to serving a different channel. Each instance of AAL1 -indication processor 2112 extracts the corresponding channel's octets of traffic from the received payloads 1104 and outputs the octets to one or more DSPs 2110 for processing. A single DSP 2110 may be time-shared by the plurality of channels, or a separate DSP 2110 may be dedicated to serving each channel. DSPs 2110 perform designated processing for the traffic of each channel, and output the processed traffic into a talk TSI 2108. Talk TSI 2108 performs any necessary time-slot interchange function thereon to align the traffic octets of different channels with the sequence of their corresponding time slots on medium 102. Talk TSI 2108 also provides support for wideband channels that comprise multiple time slots; it ensures that those time slots are output in their proper order. Talk TSI 2108 then feeds the ordered time slots of traffic into a TDM talk queue 2106, from where they are transmitted onto designated time slots of frames on medium 102 by TDM talk ISR 2104.

A control structure 2160 controls the operation of the components of data path 2150. Cell deconstructor 2100 receives control information over a control medium 2122, which illustratively duplicates control medium 122 of cell constructor 100. The control information is received in cell deconstructor 2100 by a command function 2124. This is a management function which tells controllers 2126-2132 of individual components of data path 2150 what their component should be doing and when. For example, it tells TSI controller 2132 when talk TSI 2108 should begin to support a new time slot and which instance of AAL1-indication 2112 that time slot should be associated with, it tells controller 2126 what VCI/VPI an instance of ATM-indication 2114 should use for a particular channel, it tells controller 2128 when to initialize an instance of AAL1-indication 2112 for a new channel, and it tells DSP 2110 what processing to perform for which channel. Controllers 2126-2132 then alert the corresponding necessary control over their associated components in data path 2150.

To keep cell deconstructor 2100 properly synchronized with the operation of communications medium 102 in the instance where medium 102 is a TDM bus, a start-of-frame signal is supplied to cell deconstructor 2100 in a signal line 134. Line 134 is monitored by a frame sync ISR routine 2136, which issues an interrupt each time that it detects the start-of frame signal. The interrupt is received by a system sequencer 2138, which is a state machine that causes the components of data path 2150 to step through their functions during each frame period. Upon receipt of the interrupt, system sequencer 2138 also starts (e.g., invokes execution of) AAL1-indication-sync function 2113 (a global function of AAL1-indication 2112).

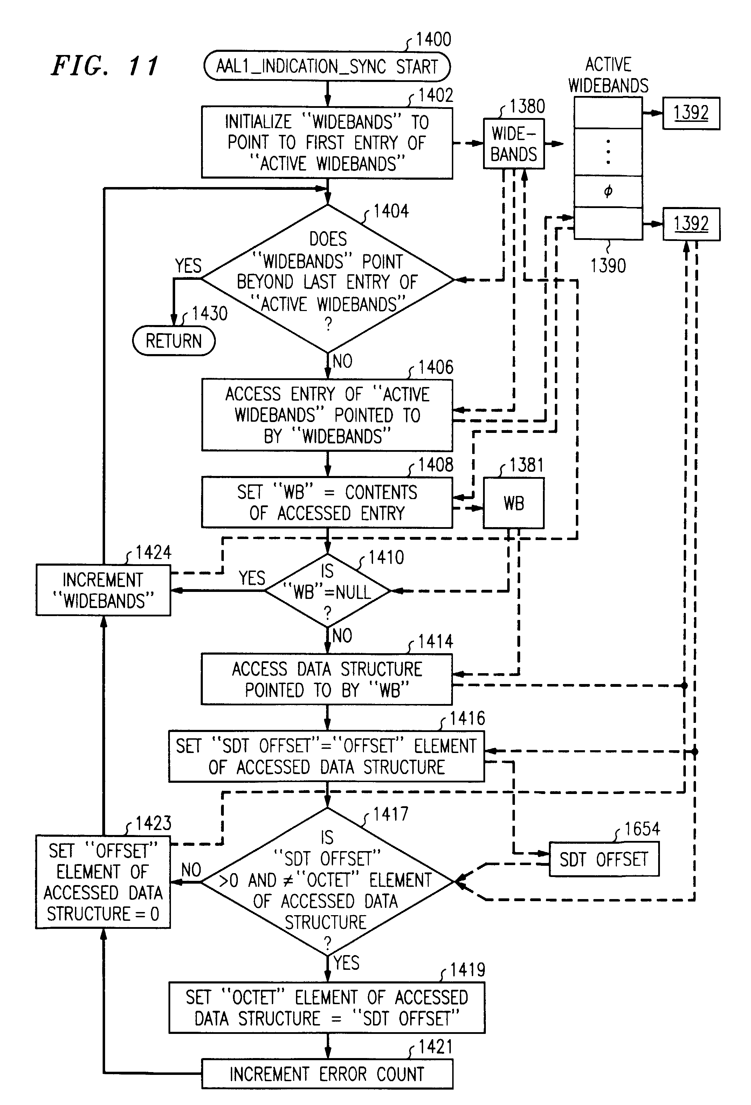

The functionality of AAL1-indication-sync function 2113 (FIG. 10) is shown in FIG. 11. Its operation parallels that of AAL1-request-sync function 113 of AAL1-request 112 (FIG. 1), and it uses data structures and variables of AAL1-indication 2112 (FIG. 10) that correspond to those of AAL1-request 112 used by AAL1-request-sync 113. Steps 1400-1414 (FIG. 11) of AAL1-indication-sync 2113 duplicate step-for-step the steps 300-314 (FIG. 3) of AAL1-request-sync 113 (FIG. 1). However, at step 1416, AAL1-indication-sync 2113 sets the value of its "SDT offset" variable 1654 to the value of "offset" element 1663 of the accessed data structure 1592 (FIG. 12). It then checks whether the value of "SDT offset" 1654 is greater than zero and not equal to the value of "octet" element 1661 of the accessed AAL1 data structure 1392, at step 1417. The value of "SDT offset" 1654 being zero is a null value that indicates that synchronization should be skipped. The value of "SDT offset" 1654 being equal to the value of "octet" element 1661 indicates that synchronization has been maintained. If both conditions are satisfied at step 1417, synchronization should neither be skipped nor has it been maintained; a synchronization error has occurred. AAL1-indication-sync 2113 therefore sets the value of "octet" element 1661 (FIG. 12) of the accessed data structure 1392 to the value of "SDT offset" variable 1654, at step 1419, to restore synchronization, and increments an error count, at step 1421. Following step 1421, or if either condition is not satisfied at step 1417, AAL1-indication-sync 2113 sets the value of "offset" element 1663 (FIG. 12) of the accessed data structure 1392 to zero, at step 1423, thereby ensuring that synchronization will not be checked again for this channel until a next SDT offset 1120 (FIG. 9) is received for this channel. It then proceeds to step 1424 to increment the value of "widebands" variable 1380, and to step 1404 to determine if all wideband channels have been considered.

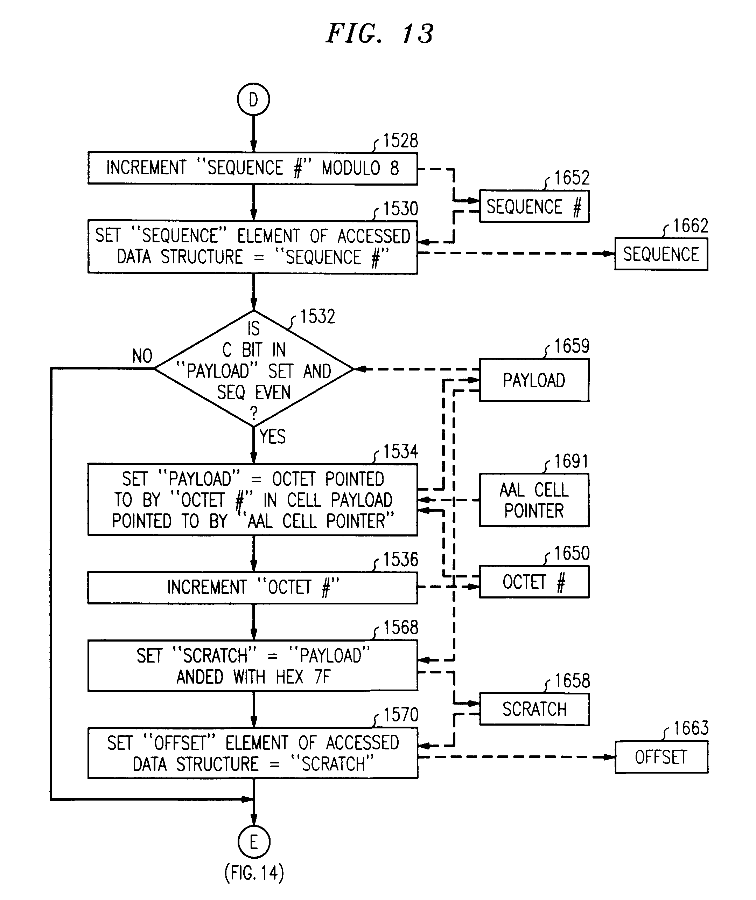

The high-level functionality of each instance of AAL1-indication 2112 (FIG. 10) is shown in FIGS. 12-14. Its operation initially parallels that of AAL1-request 112 (FIG. 1), and it uses data structures and variables that mainly correspond to those used by AAL1-request 112. Upon its invocation, at step 1500, the invoked instance of AAL1-indication 2112 receives an ATM cell payload 1104 (FIG. 9) from the corresponding instance of ATM-indication 2114 (FIG. 10), at step 1502. More specifically, it receives an address of (a pointer to) data structure 1392 (FIG. 12) that contains a pointer to the received ATM cell payload 1104 (FIG. 9). AAL1-indication 2112 sets a local variable "AAL pointer" 1690 to that data structure 1392 address, at step 1504, and then accesses the AAL data structure 1392 pointed to by "AAL pointer" 1690, at step 1506. AAL1-indication 2112 then sets a local variable "AAL cell pointer" 1691 equal to the value of a "head" element 1660 of the accessed data structure 1392, at step 1508, and sets a local variable "octet #" 1650 to the value of "octet" element 1661 of the accessed data structure 1392, at step 1510. "Head" element 1660 points to the received cell payload 1104 (FIG. 9) that is to be disassembled by this instance of AAL1-indication 2112, while "octet" element 1661 points to the octet within that cell payload that is to be disassembled next. AAL1-indication 2112 then proceeds to disassemble an octet from ATM cell payload 1104. AAL1-indication 2112 first checks whether the value of "octet #" 1650 is zero, at step 1512. If not, AAL1-indication 2112 is in the midst of disassembling an ATM cell payload 1104, and so it proceeds to FIG. 13 to disassemble another octet from the payload. If the value of "octet #" 1650 is zero at step 1512 (FIG. 12), AAL1-indication 2112 has completed disassembly of an ATM cell payload 1104 and is ready to start disassembly of a next ATM cell payload 1104. AAL1-indication 2112 sets the contents of a local variable "payload" 1659 to equal the octet pointed to by "octet #" 1650 in the cell payload 1104 pointed to by "AAL cell pointer" 1690, at step 1514, and then increments the value of "octet #" 1650, at step 1516. AAL1-indication 2112 also sets the value of a local variable "sequence #" 1652 to the value of the "sequence" element 1662 of the accessed data structure 1392, at step 1518. "Payload" 1659 contains the first octet of a cell payload 1104, and AAL1-indication 2112 extracts the sequence number therefrom by ANDing the contents with hex 70, shifting the result right by 4, and storing the ultimate result in a local variable "scratch" 1658, at step 1520. "Scratch" 1658 now contains the sequence number SEQ 1112 (FIG. 9) extracted from the first octet of cell payload 1104, and AAL1-indication 2112 compares it with the value of "sequence #" 1652, at step 1522. If the two values are not equal, it means that an ATM cell 1100 has been lost in transmission, and so AAL1-indication 2112 increments a lost cell error counter 1758 to give an indication of the loss, at step 1524. AAL1-indication 2112 also corrects the sequence number by setting the value of "sequence #" 1652 to the value of "scratch" 1658, at step 1526. Following step 1526, or if the value of SEQ 1112 is found to equal the value of "sequence #" 1652 at step 1522, AAL1-indication 2112 increments "sequence #" 1652 and ANDs the incremented value with 7 to effect a modulo-8 operation thereon, at step 1528 (FIG. 13), and stores the result as the value of the "sequence" element 1662 of the accessed data structure 1392, at step 1530. AAL1-indication 2112 then checks if C bit 1110 of "payload" 1659 is set and SEQ 1112 (FIG. 9) is even, at step 1532. If so, it means that octet #1 of that payload is a P-format pointer 1108 (FIG. 9). AAL1-indication 2112 sets the value of "payload" 1659 to the octet pointed to by "octet #" 1650 in the cell payload 1104 pointed to by "AAL cell pointer" 1691 at step 1534, thereby retrieving octet # 1 of the cell payload 1104 and storing it in "payload" 1654. AAL1-indication 2112 then increments "octet #" 1650, at step 1536. AAL1-indication 2112 then ANDs the contents of "payload" 1654 with hex 7F to retrieve SDT offset 1120 from octet #1, and stores it in "scratch" 1651, at step 1568. AAL1-indication 2112 then sets the value of "offset" element 1663 to the retrieved value of SDT offset 1120 from "scratch" 1651, at step 1570, to ensure that the value of "offset" element 1663 is in sync with the value of SDT offset 1120.

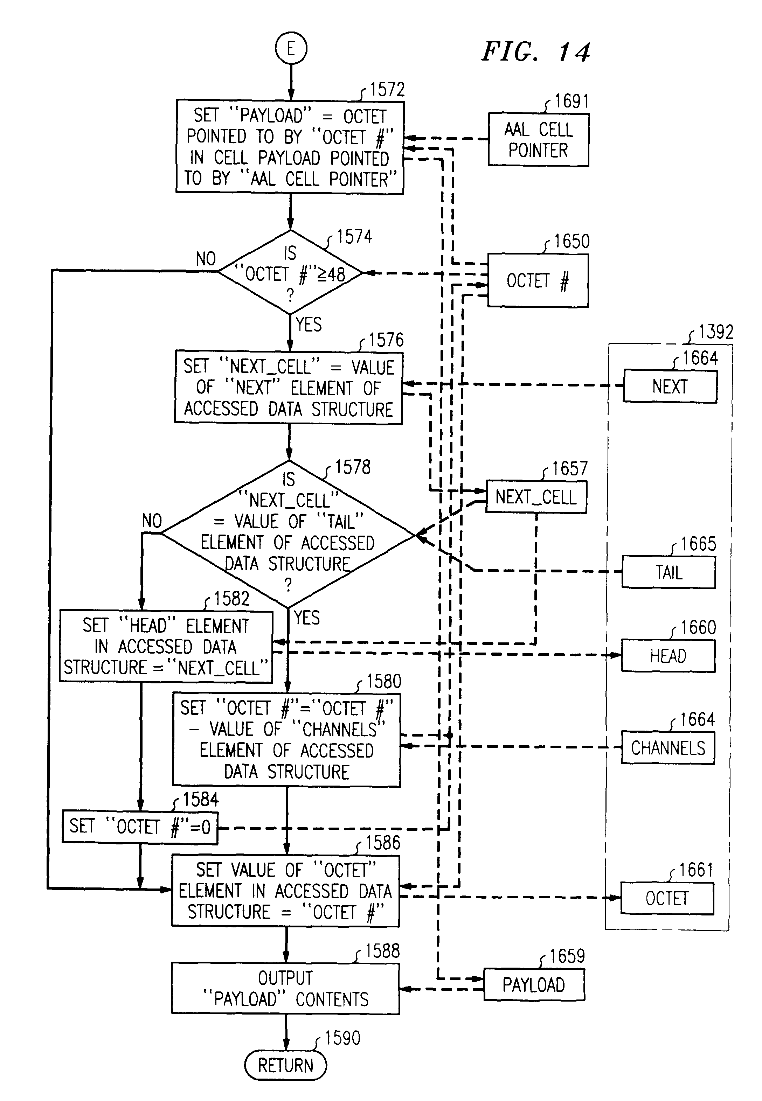

Returning to step 1532, if the condition is not met, the second octet of that cell payload 1104 is an ordinary payload octet. Therefore, following step 1532 or 1570, or if it was determined at step 1512 that the value of "octet #" 1650 is not zero, AAL1-indication 2112 proceeds to retrieve from the ATM payload 1104 (FIG. 9) that is being disassembled the octet pointed to by the value of "octet #" 1650, and to store it in "payload" 1659, at step 1572 of FIG. 14. AAL1-indication 2112 then checks if the value of "octet #" 1650 equals or exceeds 48, at step 1574. If so, it means that disassembly of this ATM cell payload 1104 has been completed, so AAL1-indication 2112 retrieves the value of a "next" element 1664 of the accessed AAL data structure 1392 and stores it in a local variable "next cell" 1657, at step 1576. "Next" element 1664 is a pointer to the next cell payload 1104, if any, that is ready for this instance of AAL1-indication 2112 to disassemble. AAL1-indication 2112 then checks whether the value of "next cell" 1657 equals the value of a "tail" element 1665 of the accessed data structure 1392, at step 1578. "Tail" element 1665 is a pointer to the last cell payload 1104 that has been disassembled. If the two values are equal, it means that there are no ATM cell payloads 1104 available to be disassembled, so AAL1-indication 2112 decrements the value of "octet #" 1650 by the value of "channels" element 1664 of the accessed data structure 1392, at step 1580. If the value of the "tail" element 1665 does not equal the value of the "head" element 1660, there is another ATM cell payload 1104 available to be disassembled, and so AAL1-indication 2112 prepares to do so. It sets the value of "head" element 1660 of the accessed data structure 1392 to the value of "next cell" 1657, at step 1582, and sets "octet #" 1650 equal to zero, at step 1584. Following step 1580 or 1584, or if the value of "octet #" 1650 was found to be less than 48 at step 1574, AAL1-indication 2112 sets the value of "octet" element 1661 of the accessed data structure 1392 to the value of "octet #" 1650, at step 1586, outputs the contents of "payload" 1659, which is the payload octet retrieved from the cell payload 1104, to DSP 2110 (FIG. 10), at step 1588, and then returns to the point of its invocation, at step 1590.

The remaining elements 2104-2110 of talk path 2150 (FIG. 10) take the octets of traffic received from the various instances of AAL1-indication 2112, order them into talk frames, and transmit the frames on talk bus 102 within frame time intervals delineated by frame signals appearing on line 134.

Of course, various changes and modifications to the illustrative embodiment described above may be envisioned. For example the invention is applicable not only to ATM systems, but also to frame-relay, voice-over-IP (intemet protocol), and other systems that support synchronous constant-bit rate (e.g., voice, video, data) connections. Such changes and modifications can be made within the scope of the invention and without diminishing its attendant advantages.

## Claims

1. A method of synchronizing synchronous information received by a receiver (2100) over an asynchronous communications link (120) with a synchronous communications medium (102) at the receiver, comprising:
asynchronously receiving (1814) at the receiver a stream of information including the synchronous information (1104) and an indication (1108) of where in the stream of information occurred a boundary between blocks of the synchronous information;
assembling (1816, 1822) the received synchronous information along with other information into transmission blocks; and transmitting (2104) the transmission blocks on the medium,
CHARACTERISED BY the further step of
in response to receiving (1818) the indication, adjusting (1820) the assembling so that the boundary between the blocks of the synchronous information forms a boundary (FRAME SYNC) between the synchronous information carried by two successive said transmission blocks.

2. The method of claim 1 wherein:
asynchronously receiving comprises
asynchronously receiving at the receiver (2118:1814) a plurality of streams of information including corresponding synchronous information (1104) and an indication (1108) of where in the stream occurred a boundary between blocks of the synchronous information carried by said stream;
assembling comprises
assembling (2106-2114:1816, 1822) the received synchronous information from the plurality of streams into transmission blocks; and
adjusting the assembling comprises
in response to receiving the indication in any one of the streams, adjusting (2112, 2113:1820) the assembling so that the boundary between the blocks of the synchronous information of the one stream forms a boundary between the synchronous information of the one stream carried by two successive said transmission blocks.

3. The method of claim 2 wherein:
assembling the received synchronous information from the plurality of streams into the transmission blocks comprises
assembling (2106-2110:1822) the received synchronous information from the plurality of streams into each transmission block.

4. The method of claim 1 or 3 wherein:
each transmission block is a frame of information; and
transmitting comprises
transmitting (2104, 2136) each frame on the medium during occurrence of a frame interval on the medium.

5. The method of claim 1 or 3 wherein:
each boundary between blocks of the synchronous information and between the transmission blocks comprises a boundary (FRAME SYNC) between adjacent time-division-multiplex (TDM) frames of information;
each stream of information comprises a wideband channel carrying the synchronous information of said stream and comprising a plurality of time slots of each TDM frame;
assembling comprises
during each frame interval, disassembling (1816) a block's worth of the synchronous information from each stream, and
during each frame interval, assembling (1822) the disassembled block's worth of the synchronous information from each stream into a TDM frame; and
adjusting comprises
in response to receiving (1818) the indication in any one of the streams, adjusting (1820) the disassembling for the one stream so that during each frame interval disassembling of the one stream begins and ends at a block boundary.

6. The method of claim 1 or 2 wherein:
receiving the information asynchronously comprises
receiving the information in asynchronous transfer mode (ATM) cells (1100); and
each indication comprises a structured data transfer (SDT) offset pointer (1120) of an AAL payload (1104) of an ATM cell.

7. The method of claim 6 wherein:
the medium is a time-division-multiplexed (TDM) medium (102); and the SDT pointer points to a boundary between information carried by different TDM frames.

8. The method of claim 4 wherein:
asynchronously receiving comprises
receiving each stream as asynchronous transfer mode (ATM) cells (1100) including the corresponding synchronous information as AAL payload (1104) and the indication as a structured data transfer (SDT) offset pointer (1120) of the AAL payload pointing to a first block boundary between blocks in the AAL payload;
assembling comprises
during each frame interval, disassembling (1816) a block's worth of the synchronous information from an ATM cell of each stream, and
during each frame interval, assembling (1822) the disassembled block's worth of the synchronous information from every stream into a TDM frame; and
adjusting comprises
in response to commencing to disassemble a whole block's worth of information from an AAL payload that includes the SDT offset pointer, adjusting (1820) the disassembling to commence the disassembling of the whole block at the block boundary pointed to by the SDT offset pointer.

9. A communications apparatus (2100) CHARACTERISED IN THAT it performs the method of claims 1 or 2 or 3 or 4 or 5 or 6 or 7 or 8.
